# EUROPEAN PATENT SPECIFICATION

(11) **EP 1 815 546 B1**
(45) Date of publication and mention of the grant of the patent: **14.11.2012**
(21) Application number: 05818427.6
(22) Date of filing: 29.11.2005
(51) Int. Cl.: H01M 4/58, H01M 4/60, H01M 10/052, H01M 10/0567, H01M 10/0569, H01M 10/0568, H01M 6/16

(54) **ELECTROLYTE FOR LITHIUM-SULPHUR BATTERIES AND LITHIUM-SULPHUR BATTERIES USING THE SAME**
ELEKTROLYT FÜR LITHIUM-SCHWEFEL-BATTERIEN UND DIESEN VERWENDENDE LITHIUM-SCHWEFEL-BATTERIEN
ELECTROLYTE POUR ACCUMULATEURS LITHIUM-SOUFRE ET ACCUMULATEURS LITHIUM-SOUFRE DANS LESQUELS L'ELECTROLYTE EST UTILISE

(30) Priority: 02.12.2004 RU 2004135236; 02.03.2005 GB 0504290; 02.03.2005 US 657436 P
(43) Date of publication of application: 08.08.2007
(73) Proprietor: Oxis Energy Limited, D5 Culham Science Centre Abingdon Oxfordshire OX14 3DB (GB)
(72) Inventor: KOLOSNITSYN, Vladimir, Ufa, 450052 (RU); KARASEVA, Elena, Ufa, 450054 (RU)
(74) Representative: Harrison Goddard Foote
(86) International application number: PCT/GB2005/004572
(87) International publication number: WO 2006/059085

(56) References cited:
- EP-A- 0 457 741
- EP-A- 0 537 504
- EP-A- 1 030 399
- EP-A- 1 178 555
- EP-A- 1 278 216
- EP-A- 1 420 475
- EP-A- 1 580 775
- WO-A1-2006/059085
- GB-A- 2 054 948
- US-A- 3 907 597
- US-A- 4 690 877
- US-A- 5 260 145
- US-A- 5 888 673
- US-A1- 2002 192 557
- US-B1- 6 218 055
- US-B1- 6 245 465
- PATENT ABSTRACTS OF JAPAN vol. 018, no. 109 (E-1513), 22 February 1994 (1994-02-22) & JP 05 307974 A (JAPAN STORAGE BATTERY CO LTD), 19 November 1993 (1993-11-19)

## Description

### TECHNICAL FIELD

The present invention pertains generally to the field of non-aqueous electrolyte compositions for use in chemical sources of electric energy incorporating negative electrodes comprising highly reactive alkali metals. More particularly, the present invention pertains to non-aqueous electrolyte compositions which comprise a non-aqueous electrolyte solvents, salts and additives and which are suitable for use in secondary electric current producing cells. The present invention also pertains to chemical sources of electric energy comprising such electrolyte compositions.

### BACKGROUND

Throughout this application, various publications, patents, and published patent applications are referred to by an identifying citation. The disclosures of the publications, patents, and published patent specifications referenced in this application more fully describe the state of the art to which the invention pertains.

As the rapid evolution of batteries continues, and in particular as secondary electric batteries such as lithium-ion and lithium metal batteries become more widely accepted for a variety of uses, the need for safe, long lasting (greater than 300 cycles) rechargeable cells with a wide temperature working range becomes increasingly important. US patents nos 5,460,905, 5,462,566, 5,582,623 and 5,587,253 describe the basic elements and performance requirements of secondary lithium batteries and their components. A key issue in the development of high energy secondary batteries is the choice of the electrolyte composition to improve the cycle life, temperature working range and safety of the battery.

One of the many problems encountered in the process of producing electrolyte elements is that there is a difficulty in obtaining good cycling efficiency, cycle life, temperature stability, and safety of the cells due to the reactivity of the electrolyte element with the electrode elements, particularly due to reactions with the anode. This is especially true with anodes comprising lithium, which is highly reactive. Reactions of lithium with the electrolyte are undesirable as they lead to self discharge and early battery failure. The reaction of lithium with organic electrolyte solvents may also result in the formation of a surface film on the anode, which subsequently reduces the efficiency of the anode, and may cause uneven plating that can lead to dendrite formation. These factors limit the number of potential electrolyte compositions that may be used to form the electrolyte element

Desirable electrolyte elements provide high cycling efficiency, good ionic conductivity, good thermal stability, and reasonable cost. The number of times a lithium battery can be recharged is dependent on the efficiency of each charge and discharge cycle of the cell and provides a measure of the cycling efficiency. By cycling efficiency is meant the percent of the lithium (or other anode material) which is replated or reduced onto the anode upon full charging compared to the amount of lithium freshly stripped or oxidized from the anode on the previous full discharging of the cell. Any deviation in this percentage from 100 percent represents lithium which has been lost in terms of useful availability for the charge/discharge performance of the cell. Cycling efficiency is primarily a function of the electrolyte composition quality.

Safety factors affecting the choice of electrolyte solvents include the safety margin against overcharge of the cell. The overcharge safety margin is determined by the voltage difference between completion of recharge of the electrodes and the decomposition of the electrolyte. For instance, in lithium-ion cells, the difference in potential of the anode and cathode is about 4V. Tarascon and Guyomard, J. Electrochem. Soc., 1991, 138, 2864-2868, describe the upper voltage range of a potential scan being limited to 4.5V vs. Li/Li⁺ because of breakdown of the electrolyte at higher potentials (4.6V vs. Li/Li⁺) in a 1M LiClO₄ 50:50 EC (ethylene carbonate):DME (dimethoxyethane) electrolyte. Also, for example, Ein-Eli et al., J. Electrochem. Soc., 1997, 144, L205-L207, report the onset of electrolyte oxidation at 5.1V for an electrolyte composition comprising 1.2M LiPF₆ ethylene carbonate:dimethyl carbonate (2:3 by volume). The need for electrolyte compositions which do not decompose at high potentials is emphasized by the recent recommendation of Zhong et al., J. Electrochem. Soc., 1997, 144, 205-213, that certain lithium-ion cathode materials should be charged to above 5V.

Further factors affecting the choice of electrolyte compositions can be illustrated by reference to cells comprising intercalated carbon electrodes. Ein-Eli et al., J. Electrochem. Soc., 1996, 143, L273-277, reported that graphite electrodes, which are usually sensitive to the composition of the electrolyte solution, can be successfully cycled at high reversible capacities in electrolytes comprising ethylmethyl carbonate. These results are interesting because lithium ions cannot intercalate into graphite in diethyl carbonate solutions and cycle poorly in dimethyl carbonate solutions.

A large number of non-aqueous organic solvents have been suggested and investigated as electrolytes in connection with various types of cells containing lithium electrodes. US patent nos. 3,185,590, 3,578,500, 3,778,310, 3,877,983, 4,163,829, 4,118,550, 4,252,876, 4,499,161, 4,740,436 and 5,079,109 describe many possible electrolyte element combinations and electrolyte solvents, such as borates, substituted and unsubstituted ethers, cyclic ethers, polyethers, esters, sulfones, alkylene carbonates, organic sulfites, organic sulfates, organic nitrites and organic nitro compounds.

One class of organic electrolyte solvents that has received attention as a component of electrolyte elements for electrochemical cells and other devices are the sulfones. Sulfones can be divided into two types: i) cyclic or aromatic sulfones, and ii) aliphatic sulfones. Sulfones form a potentially attractive group of organic solvents which present a high chemical and thermal stability.

The use of the cyclic sulfones, sulfolane (tetramethylenesulfone) along with its alkyl-substituted derivatives, 3-methylsulfolane and 2,4-dimethysulfolane, as electrolyte solvents has been investigated.

US patent no. 3,907,597 to Mellors describes a liquid organic electrolyte consisting essentially of sulfolane or its liquid alkyl-substituted derivatives in combination with a co-solvent, preferably a low viscosity solvent such as 1,3-dioxolane, and an ionizable salt. Sulfolane and its liquid alkyl-substituted derivatives, such as 3-methyl sulfolane, are good non-aqueous solvents but have the disadvantage in that they have a relatively high viscosity. Thus, when metal salts are dissolved in these solvents for the purpose of improving the ionic conductivity of the solvents, the viscosity of the solvent and the salt becomes too high for its efficient use as an electrolyte for non-aqueous cell applications. For example, in the '597 patent, sulfolane is used in combination with a low viscosity co-solvent to overcome the viscosity problem.

Japanese patent publications numbers JP 08-298229, published 12th November 1996 and JP 08-298230, published 12th November 1996, describe electrolytes for electric double layer capacitors which comprise sulfolane as one of the electrolyte components.

US patent no. 4,725,927 to Morimoto et al. describes the use of sulfolane and its derivatives, 3-methylsulfolane and 2,4-dimethylsulfolane, for use in electric double layer capacitors. However they note that a sulfolane solvent has a high viscosity and a relatively high solidification temperature. Therefore, when it is used for an electrolyte solution, the ionic conductivity tends to be low.

US patent no. 5,079,109 to Takami et al. describes a non-aqueous electrolyte solvent blend that may comprise sulfolane as one of the components for use in rechargeable lithium secondary batteries. US patent no. 5,219,684 to Wilkinson et al. describes an electrolyte consisting essentially of sulfolane and a glyme for an electrochemical cell comprising a lithium containing anode and a cathode, including LiₓMnO₂ cathode active material.

US patent no. 4,550,064 to Yen et al. describes electrolytes with sulfolane type solvents which have relatively high dielectric constants and low vapor pressure. Electrolytes containing sulfolane also exhibit improved stripping/plating cycling efficiency because of the excellent reduction stability. However, the use of sulfolane solvents is inhibited by incompatibility of the polar sulfolane liquid with the hydrophobic separator and with the non-polar binder of the cathode. Methods to improve the wettability of the separator and the cathode electrode are described.

The use of the aliphatic sulfones, dimethylsulfone and dipropylsulfone, has been investigated as electrolyte solvents. US patent no. 4,690,877 to Gabano et al. reports electrolyte compositions containing at least one aromatic or aliphatic linear sulfone for use in cells operable at temperatures between 100°C and 200°C. Particularly preferred was dimethylsulfone.

Sulfone-based electrolytes comprising dimethylsulfone, dipropylsulfone, and sulfolane have been described by J. Pereira-Ramos et al., J. Power Sources, 1985, 16, 193-204 for use in lithium intercalation batteries. Molten dimethylsulfone at 150°C as an electrolyte for a rechargeable γ-MnO₂ lithium battery is described by Bach et al., J. Power Sources, 1993, 43-44, 569-575.

US patents nos. 4,060,674 and 4,104,451 to Klemann and Newman describe electrolyte compositions for reversible alkali metal cells which consist essentially of a solvent and an electronically active alkali metal salt. Organic electrolyte solvents employed are generally ones selected from the group consisting of inertly substituted and unsubstituted ethers, esters, sulfones, organic sulfites, organic sulfates, organic nitrites or organic nitro compounds. Examples of organic solvents include propylene carbonate, tetrahydrofuran, dioxolane, furan, sulfolane, dimethyl sulphite, nitrobenzene, nitromethane and the like. The preferred solvents are ethers, and preferred is an electrolyte solvent containing dioxolane.

JP patent publication number JP 09-147913, published 6th June 1997, describes electrolyte solvents containing sulfones of the formula R¹-SO₂-R² where R¹ and R² are C₁₋₄ alkyl groups, and R¹ and R² are different. Preferably the anodes are Li interaction carbonaceous anodes.

Most electrolyte systems proposed for lithium-ion batteries are not useful in lithium-sulphur batteries. Low molecular weight sulfones are good solvents for the electrolyte systems of Li-S batteries, but these sulfones have high melting temperatures, which means that they cannot be used at low temperatures. US patent no. 6,245,465 proposes (as solvents for Li-S batteries) non-cyclic sulfones or fluorinated non-symmetrical non-cyclic sulfones, which possess lower melting temperatures. This patent also discloses the use of mixtures of the aforementioned sulfones with other solvents such as carbonates, glymes, siloxanes and others. However, the melting temperatures of the proposed sulfones are not low enough for producing electrolytes with the desirable low-temperature properties. Besides, the proposed sulfones are very expensive, and this restricts their wide use.

Despite the numerous electrolyte solvents proposed for use in rechargeable cells, there remains a need for improved non-aqueous electrolyte compositions that provide beneficial effects during the useful life of the chemical sources of electric energy, and which can be incorporated easily and reliably into the cell without significant extra cost.

Embodiments of the present invention seek to provide an improved non-aqueous electrolyte composition which is suitable for use in rechargeable cells.

Embodiments of the present invention may also seek to provide a non-aqueous electrolyte contents which have greater overcharge stability

Embodiments of the present invention may further seek to provide a non-aqueous electrolyte solvent with high ionic conductivity and low solvent volatility.

Embodiments of the present invention may further seek to provide an improved non-aqueous electrolyte composition for chemical sources of electric energy which comprise alkali metal (including lithium) negative electrodes.

Embodiments of the present invention may further seek to provide non-aqueous electrolyte compositions that are useful with both lithium metal and lithium-ion anodes for secondary battery cells.

Embodiments of the present invention may further seek to provide non-aqueous electrolyte compositions that provide for reversible intercalation of lithium into graphite.

Embodiments of the present invention may further seek to provide non-aqueous electrolyte compositions that increase the cycle life and safety of secondary cells.

Embodiments of the present invention may further seek to provide non-aqueous electrolyte compositions that provide better temperature stability

Embodiments of the present invention may further seek to provide secondary lithium cells employing the electrolytes of the present invention

According to a first aspect of the present invention, there is provided an electrolyte as defined in claim 1.

Preferably, the concentrations of the components of the solution are selected so that the solution is within at most ±20% of its eutectic concentration, and even more preferably within at most ±10% of its eutectic concentration.

The use of eutectic or near-eutectic compositions dramatically improves low temperature performance properties of the electrolyte. A significant reduction of the limit of capacity for work of lithium-sulphur batteries at reduced temperatures is obtained, as is an improvement in low temperature capacity and power characteristics. Moreover, the battery cycle life at low temperatures can be extended.

The sulfone that is present in addition to sulfolane preferably has a molecular weight of 94 to 150.

The electrolyte salt may be at least one salt or a mixture of salts selected from a group comprising: lithium hexafluorophosphate (LiPF₆), lithium hexafluoroarsenate (LiAsF₄), lithium perchlorate (LiClO₄), lithium sulfonylimide trifluoromethane (LiN(CF₃SO₂)₂)) and lithium trifluorosulfonate (CF₃SO₃Li),

The concentration of the at least one electrolyte salt is preferably between 0.1M and a saturation concentration.

The electrolyte may further include one or more organic or non-organic additives for contributing to a solid electrolyte interface (SEI) phase formation on a surface of a negative electrode (anode) and for improving a cycling of the negative electrode. The additive may be at least one substance or a mixture of substances selected from a group comprising: S, Li₂Sₙ, CO₂, SO₂, N₂O, Cl₂, Br, I, and amines.

The amount of additive is preferably between 0.2% and 10% of the total mass of the electrolyte.

According to a second aspect of the present invention, there is provided a lithium-sulphur battery comprising a negative electrode including a lithium-containing material, a positive electrode including a sulphur-containing material and an electrolyte of the first aspect.

The negative electrode may include a negative electrochemically active material selected from a list comprising: metallic lithium, lithium-containing alloy, lithium combined with non-active sulphur, a compound that can reversibly intercalate lithium ions (such as metal powders, lithium metal-carbon and lithium metal-graphite intercalates and mixtures thereof), and compounds that can reversibly go through a reduction-oxidation process with lithium ions.

The positive electrode may include a positive electrochemically active material comprising at least one sulphur-based material selected from a list comprising: elemental sulphur, Li₂Sₙ compounds (with n ≥ 1), organic sulphur compounds, and sulphur-containing polymers.

For a better understanding of the present invention and to show how it may be carried into effect, reference shall now be made by way of example to the accompanying drawing, in which:

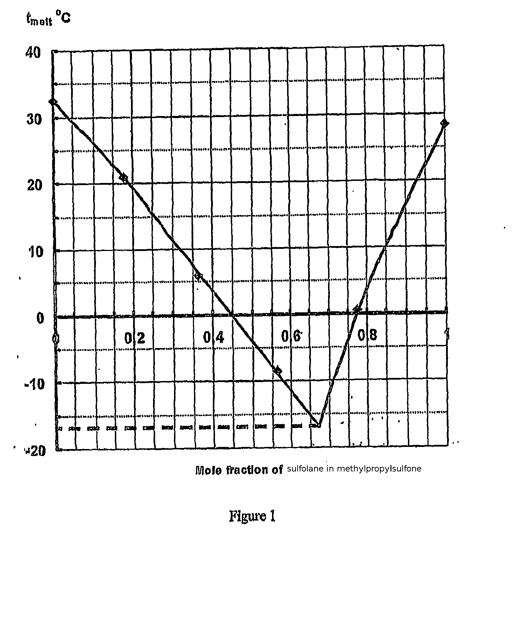

FIGURE 1 is a constitution diagram of a sulfolane-methylpropylsulfone system.

### EXAMPLE 1

Low-molecular weight sulfones were synthesized. Their properties were studied and results are displayed in the table.

| **Name** | **Molecular mass** | **Density 10³*kg/m³** | **viscosity N*s/m²,10³** | **Molar Volume, m³/mole *10⁶** | **Congelation Temperature** | **Refractive index** | **Permittivit** |
|---|---|---|---|---|---|---|---|
| | | | | | **°C** | **n_{D}** | **ε** |
| **Methylenesulfone *** | 108.2 | 1.1638* | 4.75* | 93.0* | 34.5 | 1.4453 | 57.5 |
| **Methylpropylsulfone** | 122.2 | 1.1081 | 5.22 | 110.3 | 32.5 | 1.4472 | 40.2 |
| **Methylbutylisulfone** | 136.2 | 1.0686 | 6.58 | 127.5 | 30.3 | 1.4485 | 35.1 |
| **Sulfolane** | 120.2 | 1.2594 | 9.04 | 95.4 | 28.4 | 1.4820 | 42.9 |
| **2,4-methylsulfolane** | 148.2 | 1.1263 | 6.74 | 131.6 | 18.0 | 1.4708 | 30.0 |

| | | | | | | | |
|---|---|---|---|---|---|---|---|
| • t=40°C | | | | | | | |

### EXAMPLE 2

A composition was prepared from 0.8ml of methylpropylsulfone (melting temperature 32.5°C) and 0.2ml of sulfolane (melting temperature 28.4°C). The melting temperature of the mixture was +21°C.

### EXAMPLE 3

A composition was prepared from 0.6ml of methylpropylsulfone (melting temperature 32.5°C) and 0.4ml of sulfolane (melting temperature 28.4°C). The melting temperature of the mixture was +6°C.

### EXAMPLE 4

A composition was prepared from 0.4ml of methylpropylsulfone (melting temperature 32.5°C) and 0.6ml of sulfolane (melting temperature 28.4°C). The melting temperature of the mixture was -8.5°C,

### EXAMPLE 5

A composition was prepared from 0.2ml of methylpropylsulfone (melting temperature 32.5°C) and 0.8ml of sulfolane (melting temperature 28.4°C). The melting temperature of the mixture was +0.5°C.

The constitution diagram of Figure 1 shows the melting temperatures of pure sulfolane and pure methylpropylsulfone, and also the melting temperatures of mixtures thereof. Extrapolation provides the composition of the eutectic mixture and its melting temperature. The data obtained indicate that the melting temperature of the eutectic mixture is about -17°C, which is about 47°C lower than that of the initial sulfone components.

### EXAMPLE 6 (Comparative)

A lithium-sulphur battery was produced, the battery comprising an anode made of metal lithium foil, a Celgard® separator and a sulphur cathode containing elemental sulphur (70% by weight) as a depolarizer, carbon-conducting additive (Ketjenblack EC-600JD, 10% by weight) and a binder (polyethylene oxide with molecular mass 4000000, 20 % by weight). The specific energy of the cathode was measured to be 2mAh/cm². The assembled battery was filled with an electrolyte in the form of a 1M solution of LiClO₄ in sulfolane. The battery was cycled with a current density of 0.3mA/cm² at 25°C, The discharge capacity at the first cycle was 1.45mAh/cm². The degree of sulphur utilization was 72.5%,

### EXAMPLE 7 (Comparative)

A lithium-sulphur battery was produced as described in Example 6. The battery was cycled with a current density of 0.3mA/cm² at 0°C. The discharge capacity at the first cycle was 0.42mAh/cm², The degree of sulphur utilization was 21 %.

### EXAMPLE 8 (Comparative)

A lithium-sulphur battery was produced as described in Example 6. The battery was cycled with a current density of 0.3mA/cm² at -10°C. The discharge capacity at the first cycle was 0.02mAh/cm². The degree of sulphur utilization was 1%.

### EXAMPLE 9

A lithium-sulphur battery was produced as described in Example 6, but using instead as the electrolyte a 1M solution of LiClO₄ in a eutectic mixture of sulfolane (2M) and ethylbutylsulfone (dM). The battery was cycled with a current density of 0.3mA/cm² at 25°C. The discharge capacity at the first cycle was 1.53mAh/cm². The degree of sulphur utilization was 76.5%.

### EXAMPLE 10

A lithium-sulphur battery was produced as described in Example 6, but using instead as the electrolyte a 1M solution of LiClO₄ in a eutectic mixture of sulfolane (2M) and ethylbutylsulfone (1M). The battery was cycled with a current density of 0.3mA/cm² at -10°C. The discharge capacity at the first cycle was 1.01 mAh/cm². The degree of sulphur utilization was 50.5%.

### EXAMPLE 11 (Comparative)

A lithium-sulphur battery was produced as described in Example 6, but using instead as the electrolyte a 1M solution of LiClO₄ in 2,4-dimethylsulfolene. The battery was cycled with a current density 0.3mA/cm² at -10°C. The discharge capacity at the first cycle was 0.13mAh/cm². The degree of sulphur utilization was 6.5%.

The examples listed above demonstrate the advantages of batteries with electrolytes made of solutions of electrolyte salts in eutectic mixtures of sulfones, At reduced temperatures (0°C to -10°C) the discharge capacity and degree of sulphur utilization are respectively 2.5 and 6 times higher than for non-eutectic electrolyte solutions.

Throughout the description and claims of this specification, the words "comprise" and "contain" and variations of the words, for example "comprising" and "comprises", mean "including but not limited to", and are not intended to (and do not) exclude other components, integers, moieties, additives or steps.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. An electrolyte for a lithium-sulphur battery, the electrolyte comprising a solution of at least one electrolyte salt in at least two aprotic solvents, **characterized in that** the first aprotic solvent is sulfolane and the second aprotic solvent, is a sulfone, and wherein the concentrations of the components of the solution are selected so that the solution is at its eutectic concentration or within at most ±30% of its eutectic concentration.

2. An electrolyte as claimed in claim 1, wherein the concentrations of the components of the solution are selected so that the solution is within at most ±20% of its eutectic concentration.

3. An electrolyte as claimed in claim 1, wherein the concentrations of the components of the solution are selected so that the solution is within at most ±10% of its eutectic concentration.

4. An electrolyte as claimed in any one of the proceeding claims, wherein the second aprotic solvent is a sulfone having a molecular weight of 94 to 150.

5. An electrolyte as claimed in any preceding claim, wherein the electrolyte salt is at least one salt or a mixture of salts selected from a group comprising: lithium hexafluorophosphate (LiPF₆), lithium hexafluoroarsenate (LiAsF₆), lithium perchlorate (LiClO₄), lithium sulfonylimide trifluoromethane (LiN(CF₃SO₂)₂)) and lithium trifluorosulfonate (CF₃SO₃Li).

6. An electrolyte as claimed in any preceding claim, wherein the concentration of the at least one electrolyte salt is between 0.1M and a saturation concentration.

7. An electrolyte as claimed in any preceding claim, further including as an additive one or more organic or non-organic additives for contributing to a solid electrolyte interface (SEI) phase formation on a surface of a negative electrode and for improving a cycling of the negative electrode.

8. An electrolyte as claimed in claim 7, wherein said additive is at least one substance or a mixture of substances selected from a group comprising: S, Li₂Sₙ, CO₂, SO₂, N₂O, Cl₂, Br, I, and amines.

9. An electrolyte as claimed in claim 8 or 9, wherein the amount of additive is between 0.2% and 10% of the total mass of the electrolyte.

10. A lithium-sulphur battery comprising a negative electrode including a lithium-containing material, a positive electrode including a sulphur-containing material and an electrolyte as claimed in any one of claims 1 to 9.

11. A battery as claimed in claim 10, wherein the negative electrode includes a negative electrochemically active material selected from a list comprising: metallic lithium, lithium-containing alloy, lithium combined with non-active sulphur, a compound that can reversibly intercalate lithium ions (including but not limited to metal powders, lithium metal-carbon and lithium metal-graphite intercalates and mixtures thereof, and compounds that can reversibly go through a reduction-oxidation process with lithium ions.

12. A battery as claimed in any one of claims 10 or 11, wherein the positive electrode includes a positive electrochemically active material comprising at least one sulphur-based material selected from a list comprising: elemental sulphur, Li₂Sₙ compounds (with n ≥ 1), organic sulphur compounds, and sulphur-containing polymers.

13. Use of an electrolyte as claimed in any one of claims 1 to 9 as an electrolyte in a lithium sulphur battery.

## Patentansprüche

1. Elektrolyt für eine Lithium-Schwefel-Batterie, wobei der Elektrolyt eine Lösung aus mindestens einem Elektrolytsatz in mindestens zwei aprotischen Lösemitteln umfasst, **dadurch gekennzeichnet, dass** es sich bei dem ersten aprotischen Lösemittel um Sulfolan handelt, und wobei es sich bei dem zweiten aprotischen Lösemittel um ein Sulfon handelt, und wobei die Konzentrationen der Bestandteile der Lösung so ausgewählt werden, dass die Lösung eine eutektische Konzentration aufweist oder sich innerhalb von höchstens ± 30 % ihrer eutektischen Konzentration befindet.

2. Elektrolyt nach Anspruch 1, wobei die Konzentrationen der Bestandteile der Lösung so ausgewählt werden, dass sich die Lösung innerhalb von höchstens ± 20 % ihrer eutektischen Konzentration befindet.

3. Elektrolyt nach Anspruch 1, wobei die Konzentrationen der Bestandteile der Lösung so ausgewählt werden, dass sich die Lösung innerhalb von höchstens ± 10 % ihrer eutektischen Konzentration befindet.

4. Elektrolyt nach einem der vorstehenden Ansprüche, wobei es sich bei dem zweiten aprotischen Lösemittel um ein Sulfon mit einem Molekulargewicht von 94 bis 150 handelt.

5. Elektrolyt nach einem der vorstehenden Ansprüche, wobei es sich bei dem Elektrolytsalz um mindestens ein Salz oder eine Mischung aus Salzen handelt, die aus einer Gruppe ausgewählt werden, die folgendes umfasst: Lithiumhexafluorphosphat (LiPF₆), Lithiumhexafluorarsenat (LiAsF₆), Lithiumperchlorat (LiClO₄), Lithiumsulfonylimidtrifluormethan (LiN(CF₃SO₂)₂)) und Lithiumtrifluorsulfonat (CF₃SO₃Li).

6. Elektrolyt nach einem der vorstehenden Ansprüche, wobei die Konzentration des mindestens einen Elektrolytsalzes zwischen 0,1 M und einer Sättigungskonzentration liegt.

7. Elektrolyt nach einem der vorstehenden Ansprüche, wobei dieser ferner als einen Zusatzstoff einen oder mehrere organische oder nicht organische Zusatzstoffe aufweist, um zu einer Phasenbildung einer Feststoffelektrolytgrenzflächen (SEI) auf einer Oberfläche einer negativen Elektrode und zur Verbesserung eines Durchlaufs der negativen Elektrode beizutragen.

8. Elektrolyt nach Anspruch 7, wobei es sich bei dem genannten Zusatzstoff um mindestens eine Substanz oder eine Mischung aus Substanzen aus einer Gruppe handelt, die folgendes umfasst: S, Li₂Sₙ, CO₂, SO₂, N₂O, Cl₂, Br, I und Amine.

9. Elektrolyt nach Anspruch 7 oder 8, wobei die Menge des Zusatzstoffes zwischen 0,2 $ und 10 % der Gesamtmasse des Elektrolyts liegt.

10. Lithium-Schwefel-Batterie, die eine negative Elektrode umfasst, die ein lithiumhaltiges Material aufweist, eine positive Elektrode, die ein schwefelhaltiges Material aufweist, und einen Elektrolyt nach einem der Ansprüche 1 bis 9.

11. Batterie nach Anspruch 10, wobei die negative Elektrode eine negative, elektrochemisch aktive Substanz aufweist, die aus einer Liste ausgewählt wird, die folgendes umfasst: metallisches Lithium, eine lithiumhaltige Legierung, Lithium in Kombination mit nicht aktivem Schwefel, eine Verbindung, die umkehrbar Lithiumionen einlagern kann (einschließlich, jedoch nicht beschränkt auf Metallpulver, Lithium-Metall-Kohlenstoff und Lithium-Metall-Graphit-Einlagerungen und Mischungen dieser), und Verbindungen, die umkehrbar einen Reduktions-Oxidations-Prozess mit Lithiumionen durchlaufen können.

12. Batterie nach einem der Ansprüche 9 bis 11, wobei die positive Elektrode eine positive, elektrochemisch aktive Substanz aufweist, das mindestens eine schwefelbasierte Substanz umfasst, die aus der Liste ausgewählt wird, die folgendes umfasst: elementaren Schwefel, Li2Sn-Verbindungen (mit n ≥ 1), organische Schwefelverbindungen und schwefelhaltige Polymere.

13. Einsatz eines Elektrolyts nach einem der Ansprüche 1 bis 9 als einen Elektrolyt in einer Lithium-Schwefel-Batterie.

## Revendications

1. Électrolyte pour un accumulateur lithium-soufre, l'électrolyte comprenant une solution d'au moins un sel électrolyte dans au moins deux solvants aprotiques, **caractérisé en ce que** le premier solvant aprotique est du sulfolane et le second solvant aprotique est une sulfone, et dans lequel les concentrations des composants de la solution sont choisies de telle sorte que la solution se trouve à sa concentration eutectique ou au plus à ±30 % de sa concentration eutectique.

2. Électrolyte selon la revendication 1, dans lequel les concentrations des composants de la solution sont choisies de telle sorte que la solution se trouve au plus à ±20 % de sa concentration eutectique.

3. Électrolyte selon la revendication 1, dans lequel les concentrations des composants de la solution sont choisies de telle sorte que la solution se trouve au plus à ±10% de sa concentration eutectique.

4. Électrolyte selon l'une quelconque des revendications précédentes, dans lequel le second solvant aprotique est une sulfone ayant un poids moléculaire de 94 à 150.

5. Électrolyte selon l'une quelconque des revendications précédentes, dans lequel le sel électrolyte est au moins un sel ou un mélange de sels choisi dans le groupe constitué de : hexafluorophosphate de lithium (LiPF₆), hexafluoroarsénate de lithium (LiAsF₆), perchlorate de lithium (LiClO₄), trifluorométhane sulfonylimide de lithium (LiN(CF₃SO₂)₂)) et trifluorosulfonate de lithium (CF₃SO₃Li).

6. Électrolyte selon l'une quelconque des revendications précédentes, dans lequel la concentration de l'au moins un sel électrolyte est comprise entre 0,1 M et une concentration de saturation.

7. Électrolyte selon l'une quelconque des revendications précédentes, comprenant en outre comme additif un ou plusieurs additifs organiques ou non organiques pour contribuer à une formation de phase d'interface électrolyte solide (en anglais « solid electrolyte interface » - SEI) sur une surface d'une électrode négative et pour améliorer un fonctionnement cyclique de l'électrode négative.

8. Électrolyte selon la revendication 7, dans lequel ledit additif est au moins une substance ou un mélange de substances choisies dans le groupe constitué de : S, Li₂Sₙ, CO₂, SO₂, N₂O, Cl₂, Br, I, et amines.

9. Électrolyte selon la revendication 8 ou 9, dans lequel la quantité d'additif est comprise entre 0,2 % et 10 % de la masse totale de l'électrolyte.

10. Accumulateur lithium-soufre comprenant une électrode négative comprenant une matière contenant du lithium, une électrode positive comprenant une matière contenant du soufre et un électrolyte selon l'une quelconque des revendications 1 à 9.

11. Accumulateur selon la revendication 10, dans lequel l'électrode négative comprend une matière active électrochimiquement négative choisie dans une liste comprenant : lithium métallique, alliages contenant du lithium, lithium associé à du soufre non actif, composé pouvant intercaler de manière réversible des ions lithium (y compris mais sans s'y limiter, poudres métalliques, produits d'insertion métal-carbone de lithium et métal-graphite de lithium et leurs mélanges), et composés pouvant subir de manière réversible un processus de réduction-oxydation avec des ions lithium.

12. Accumulateur selon l'une quelconque des revendications 10 ou 11, dans lequel l'électrode positive comprend une matière active électrochimiquement positive comprenant au moins une matière à base de soufre choisie dans la liste constituée de : soufre élémentaire, composés Li₂Sn (avec n ≥ 1), composés organiques du soufre, et polymères contenant du soufre.

13. Utilisation d'un électrolyte selon l'une quelconque des revendications 1 à 9 comme électrolyte dans un accumulateur lithium soufre.
